# FASCICULE DE BREVET EUROPEEN

(11) **EP 1 912 103 B1**
(45) Date de publication et mention de la délivrance du brevet: **13.03.2013**
(21) Numéro de dépôt: 07115132.8
(22) Date de dépôt: 28.08.2007
(51) Int. Cl.: G05B 23/02

(54) **Procédé et dispositif de surveillance d'asservissement d'actionneur**
Verfahren und Vorrichtung zur Überwachung der Servo-Regelung eines Stellglieds
Method and device for supervising the servo function of an actuator

(30) Priorité: 05.09.2006 FR 0607757
(43) Date de publication de la demande: 16.04.2008
(73) Titulaire: THALES, 92200 Neuilly sur Seine (FR)
(72) Inventeur: Le Bastard, Jean-Claude, 31100 TOULOUSE (FR)
(74) Mandataire: Esselin, Sophie

(56) Documents cités:
- WO-A-2006/014997
- US-A- 4 542 679
- US-A- 5 319 296

## Description

Le domaine de l'invention est celui des procédés et des dispositifs de surveillance d'asservissement d'actionneurs. Les actionneurs concernés agissent, par exemple, sur des commandes de vol d'aéronef : de tels actionneurs équipent, en particulier, des hélicoptères.

Pour stabiliser et diriger son appareil, un pilote d'hélicoptère actionne manuellement des moyens de pilotage (manche cyclique, pas collectif et pédales) pour agir sur les axes de pilotage de l'hélicoptère (rotor principal ou rotor de queue). Un déplacement latéral ou longitudinal du manche cyclique permet d'agir respectivement sur l'axe latéral ou longitudinal de l'hélicoptère en modifiant l'incidence des pales du rotor principal. Le pas collectif permet d'adapter la puissance moteur aux conditions de vol en modifiant l'incidence des pales du rotor principal et permet de modifier la vitesse ascensionnelle et/ou longitudinale de l'hélicoptère. Les pédales permettent d'orienter le nez de l'hélicoptère en modifiant l'incidence des pales du rotor de queue. Le mouvement des moyens de pilotage est envoyé, au moyen de transmissions mécaniques, assistée en puissance par des circuits hydrauliques aux axes de pilotage. Les transmissions mécaniques sont, le plus souvent, disposées en série les unes par rapport aux autre et formant des chaînes de transmissions mécaniques. L'ensemble constitué par un moyen de pilotage, la transmission mécanique et le circuit hydraulique associée constitue une commande de vol liée à l'axe de pilotage considéré.

Les hélicoptères sont souvent équipés d'un équipement de pilotage automatique, constitué d'un moyen de calcul et d'actionneurs, qui agit sur les commandes de vol, sous l'autorité du pilote, en vue de remplir deux missions principales : une première mission d'assistance au pilote, et une deuxième mission de pilotage automatique.

Lorsqu'il assiste le pilote dans la conduite manuelle de son hélicoptère, l'équipement de pilotage automatique permet d'une part d'amortir les évolutions de la machine pour en faciliter le contrôle par le pilote, et d'autre part de maintenir la configuration courante de vol (attitudes latérale et longitudinale, et cap) permettant ainsi au pilote de lâcher momentanément les moyens de pilotage sans se placer dans une configuration de vol qui serait dangereuse.

Lorsqu'il est en mode de pilotage automatique, l'équipement de pilotage automatique permet d'asservir un ou plusieurs paramètres de vol (altitude, vitesse verticale, vitesse longitudinale, vitesse latérale, cap, navigation....) sur une ou plusieurs valeurs de consigne choisies préalablement par le pilote.

Pour agir sur une commande de vol, l'équipement de pilotage automatique emploie un « vérin série », qui est un actionneur mécanique linéaire placé en série dans la chaîne de transmission mécanique. Cet actionneur comporte un corps et un axe de sortie, il est en général du type vis sans fin / écrou et il a une autorité réduite et un temps de réponse court. Il transforme une commande électrique en un mouvement de translation de son axe de sortie par rapport à son corps. Les « vérins série » sont dits « mécaniquement irréversibles », c'est à dire qu'ils se déforment uniquement lorsqu'une commande électrique leur est appliquée. En particulier lorsque l'équipement de pilotage automatique est hors fonctionnement, les « vérins série » sont sans effet sur la conduite de l'hélicoptère. Une position neutre d'un vérin série correspond à la position où l'extrémité libre de son axe de sortie est à mi-course.

On distingue deux types de pannes, ou d'anomalie de fonctionnement pouvant toucher l'asservissement d'un actionneur agissant sur une commande de vol et pouvant perturber le déplacement de l'actionneur :
- un premier type de panne regroupe toutes les pannes dont l'origine est interne à l'équipement de pilotage automatique, ce type de panne concerne, par exemple, les dysfonctionnements d'un vérin série ou d'un calculateur de l'équipement de pilotage automatique produisant l'asservissement en position de l'actionneur.
- un deuxième type de panne regroupe toutes les pannes dont l'origine est externe à l'équipement de pilotage automatique, ce type de panne concerne par exemple les anomalies de fonctionnement des circuits hydrauliques.

Dans l'art antérieur, sur un équipement de pilotage automatique comportant un calculateur agissant simultanément sur plusieurs commandes de vol correspondant à différents axes de pilotage de l'hélicoptère (roulis, tangage et lacet), lorsqu'une panne est détectée, un dispositif de surveillance des asservissements prend une mesure de sauvegarde indépendamment du type de la panne. Cette mesure consiste à désengager complètement l'équipement de pilotage automatique, c'est à dire à inhiber la génération de tous les asservissements destinés à des actionneurs agissant sur des commandes de vol, et à recentrer la position des différents actionneurs autour de leur position neutre au moyen de circuits de puissance indépendants.

Cette mesure de sauvegarde est simple et très sûre mais elle présente l'inconvénient d'être très pénalisante pour le pilote de l'hélicoptère. En effet, le désengagement complet de l'équipement de pilotage automatique conduit à une augmentation importante de la charge de travail pilote. Pour réduire la probabilité de désengagement complet de l'équipement de pilotage automatique, il est nécessaire de limiter les inhibitions de l'ensemble des asservissements produits par le calculateur aux seules situations où la mesure de sauvegarde ne peut pas se réduire à l'inhibition d'un unique asservissement destiné à un axe défaillant.

Une solution de l'art antérieur pour résoudre ce problème consiste à utiliser un double circuit hydraulique, sur toutes les commandes de vol de l'hélicoptère, c'est à dire sur tous les axes de l'hélicoptère. Lorsqu'une panne survient sur un premier circuit hydraulique, le deuxième circuit hydraulique prend le relais et assure la fonction du premier circuit hydraulique. C'est uniquement en cas de panne simultanée des deux circuits hydrauliques de tous les axes de l'hélicoptère que l'équipement de pilotage automatique n'a plus d'effet.

Cette solution n'est pas toujours mise en oeuvre par l'avionneur dans la mesure où elle n'est pas indispensable et où elle réduit la viabilité économique. C'est le cas sur des hélicoptères de taille moyennes, comme par exemple pour l'hélicoptère A109LUH : pour cet appareil, la perte de l'assistance hydraulique sur l'axe de lacet n'est pas rédhibitoire dans la mesure où le pilote peut toujours déplacer les commandes de vol et agir sur le rotor de queue. Par contre au niveau du rotor principal, il est indispensable d'avoir une redondance hydraulique dans la mesure où le pilote ne peut agir sur ce rotor sans assistance hydraulique. WO 2006/014997 décrit un procédé de surveillance d'asservisse met de deplacement d'actionneur.

Le but de l'invention est de pallier cet inconvénient. Plus précisément, l'invention a pour objet un procédé de surveillance d'asservissement de déplacement d'actionneur agissant sur une commande de vol d'un aéronef, la commande de vol étant assistée en puissance par un circuit hydraulique, le circuit hydraulique pouvant délivrer une information de « panne hydraulique », l'asservissement étant généré par une unité de calcul à partir d'une information de position POSₙ de l'actionneur et d'une information de consigne de position CDEₙ calculée par l'unité de calcul, une phase d'alerte étant ouverte à la détection d'une présence d'une anomalie de fonctionnement de l'asservissement, la phase d'alerte étant ouverte à une date t₀ et étant maintenue ouverte tant que l'anomalie est présente ;
caractérisé en ce que la phase d'alerte comporte au moins les étapes suivantes :
- Déterminer si l'actionneur est dans un état bloqué ou dans un état divergent,
- Lorsque l'actionneur est dans l'état bloqué , déterminer si la durée de la phase d'alerte dépasse une valeur T_{conf2};
- Lorsque l'actionneur est dans l'état divergent, déterminer si la durée de la phase d'alerte dépasse une valeur T_{conf1} ;
- Lorsque l'actionneur est dans l'état bloqué, si la durée de la phase d'alerte ne dépasse pas une valeur T_{conf2}, déterminer si le circuit hydraulique a délivré une information de « panne hydraulique ».

Le procédé selon l'invention est fondé sur une analyse portant sur la cause et les effets des pannes du premier type et du deuxième type. L'analyse établit qu'une panne du premier type se traduit :
- soit par un déplacement de l'actionneur dans un sens opposé au sens assigné par la consigne, on parle alors « d'actionneur divergent », cette situation entraîne un mouvement non contrôlé de l'hélicoptère : une mesure de sauvegarde doit être prise très rapidement ;
- soit par une immobilisation de l'actionneur, on parle alors « d'actionneur bloqué », cette situation ne provoque pas de mouvement rapide de l'hélicoptère et la prise d'une mesure de sauvegarde pour pallier une telle panne peut être légèrement différée en raison de sa moindre gravité.

L'analyse établit en outre qu'une panne du deuxième type est induite exclusivement par une panne touchant le circuit hydraulique associé au vérin et que cette panne produit un blocage du vérin.

Chronologiquement, l'identification du type de la panne suit la détection de l'anomalie. L'identification de la cause du blocage du vérin est opérée par une information « panne hydraulique » délivrée par un manomètre associé au circuit hydraulique.

Ainsi, si une panne du premier type apparaît sur un équipement de pilotage automatique comportant un unique calculateur qui contrôle simultanément des commandes de vol sur plusieurs axes de l'hélicoptère (roulis, tangage et lacet), il existe un risque que la panne électronique se propage d'un axe à l'autre. Dans cette situation, il est impératif de désengager complètement l'équipement de pilotage automatique et de recentrer la position des différents actionneurs autour de leur position neutre par un circuit de puissance indépendant. C'est la situation que l'on rencontre dans le cas où la panne concerne un calculateur et perturbe la génération d'un asservissement destiné à un actionneur. L'effet produit peut être soit un déplacement de l'actionneur dans un sens contraire au sens assigné par l'asservissement soit un blocage d'un vérin série.

De même, sur ce même équipement de pilotage automatique, si une panne du deuxième type touche un unique circuit hydraulique, une mesure de sauvegarde simple, à condition qu'aucune panne du premier type survienne concomitamment, consiste à inhiber la génération de l'asservissement destiné à l'actionneur agissant sur le circuit hydraulique défaillant sans pour autant inhiber la génération des autres asservissements, non concernés par la panne.

Parmi les avantages du procédé selon l'invention on compte:
- la robustesse : la détection des anomalies est peu sensible aux déclenchements intempestifs comme ceux rencontrés par exemple dans une situation où la vitesse de l'actionneur diminue du fait d'une charge mécanique importante induite par un niveau faible de pression hydraulique ou d'un niveau faible de l'alimentation électrique de l'actionneur.
- la sélectivité : la distinction du type de la panne peut permettre d'éviter une inhibition de totale de l'équipement de pilotage automatique lorsque survient une panne du deuxième type concernant un unique circuit hydraulique.
- la réactivité : des seuils de sensibilité de valeur différente sont mis en place en fonction de la nature de l'anomalie détectée. La rapidité de la détection d'une panne du premier type est adaptée à une reprise en main rapide par le pilote du contrôle de l'hélicoptère.

L'invention concerne aussi un dispositif de surveillance d'un asservissement de déplacement d'actionneur, agissant sur une commande de vol d'un aéronef, la commande de vol étant assistée en puissance par un circuit hydraulique pouvant délivrer une information de « panne hydraulique » IPH, l'asservissement étant généré, à un instant tₙ, à partir d'une information de position POSₙ de l'actionneur ACT à l'instant tₙ et d'une consigne de position CDEₙ calculée par une unité de calcul à l'instant tₙ,
caractérisé en ce qu'il comporte :
- une unité de détection UDET pour déterminer, à la date tₙ, pour n supérieur ou égal à 1 :
   ○ une présence d'une anomalie de fonctionnement de l'asservissement ;
   ○ si le dispositif de surveillance reçoit une information « panne hydraulique » IPH, générée par le circuit hydraulique.
- une unité de validation UVA pour:
   ○ ouvrir une phase d'alerte lorsque la présence d'une anomalie est détectée ;
   ○ maintenir la phase d'alerte ouverte tant que l'unité de détection UDET détecte la présence de l'anomalie ;
   ○ clore la phase d'alerte dès que l'unité de détection UDET ne détecte plus la présence d'une anomalie ou dès que la génération, par l'unité de calcul, de l'asservissement de déplacement destiné à l'actionneur est inhibée.
- une unité de datation UDA pour
   ○ déterminer la date tₒ à laquelle la phase d'alerte est ouverte,
   ○ déterminer, à l'instant tₙ, pour n supérieur ou égal à 1, si une durée de la phase d'alerte dépasse une valeur T_{conf1}
   ○ déterminer, à l'instant tₙ, pour n supérieur ou égal à 1, si la durée de la phase d'alerte dépasse une valeur T_{conf2}.
- une unité d'analyse UAN pour déterminer si l'anomalie est liée à un actionneur en état bloqué ou à un actionneur en état divergent ;

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement une boucle d'asservissement d'un actionneur selon l'art antérieur;
- la figure 2 représente schématiquement un dispositif de surveillance selon l'invention ;
- la figure 3 représente un organigramme du procédé de surveillance selon l'invention.

D'une figure à l'autre, les mêmes éléments sont repérés par les mêmes références.

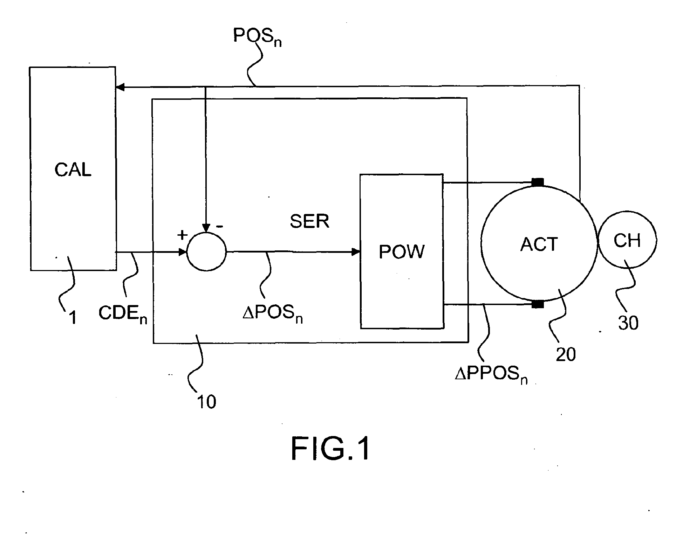

La figure 1 représente une boucle d'asservissement en position d'un actionneur agissant sur une commande de vol d'un aéronef, la commande de vol étant assistée en puissance par un circuit hydraulique. La commande de vol n'est pas représentée sur la figure.

La boucle d'asservissement fait partie d'un équipement de pilotage automatique, elle comporte :
- une unité de calcul CAL, 1;
- au moins un circuit d'asservissement et de puissance SER, 10,
- au moins un actionneur ACT, 20.

L'actionneur est, par exemple, un vérin série dont le corps est fixe, Un déplacement de l'axe de sortie du vérin est transmis mécaniquement au circuit hydraulique qui le transmet à son tour à une commande de vol.

Le circuit hydraulique CH, 30 qui est associé à l'actionneur ne fait pas partie de l'équipement de pilotage automatique.

L'unité de calcul CAL et l'unité d'asservissement et de puissance SER reçoivent l'information de position POS de l'actionneur ACT. L'unité de calcul CAL élabore une consigne de position CDEₙ à assigner à l'extrémité de l'axe de sortie du vérin série de l'actionneur ACT, à une date tₙ. La consigne de position CDEₙ est adressée à l'unité d'asservissement et de puissance, SER.

L'unité d'asservissement SER évalue une différence ΔPOSₙ entre la consigne de position CDEₙ et la position POSₙ occupée par l'actionneur ACT. La valeur de cette différence ΔPOSₙ constitue l'écart d'asservissement de position, elle est adressée à un module de puissance POW qui la convertit en une commande de puissance ΔPPOSₙ alimentant le vérin série de l'actionneur ACT.

Une recopie de la position de l'axe de sortie du vérin série de l'actionneur ACT alimente le circuit d'asservissement et de puissance SER et l'unité de calcul CAL.

Selon l'art antérieur, lorsque l'unité de calcul CAL détecte une anomalie sur le déplacement de l'actionneur ACT, il inhibe la génération de la consigne de position CDEₙ. Ce fonctionnement est conservé lorsque l'unité de calcul, CAL élabore différentes consignes de position CDEₙ destinées à plusieurs actionneurs, ACT agissant sur différentes commandes de vol assistées en puissance par différents circuits hydrauliques, CH. La génération de l'ensemble des consignes CDEₙ destinées aux différents actionneurs est inhibée dès qu'une anomalie de fonctionnement est décelée sur le déplacement de l'un des actionneurs, ACT. La conséquence de ce fonctionnement est que le pilote de l'aéronef n'est alors plus assisté dans ses tâches de pilotage (que ce soit en mode manuel ou en mode de pilotage automatique) par aucun des actionneurs ACT, dès qu'un seul actionneur ACT, à un déplacement déviant.

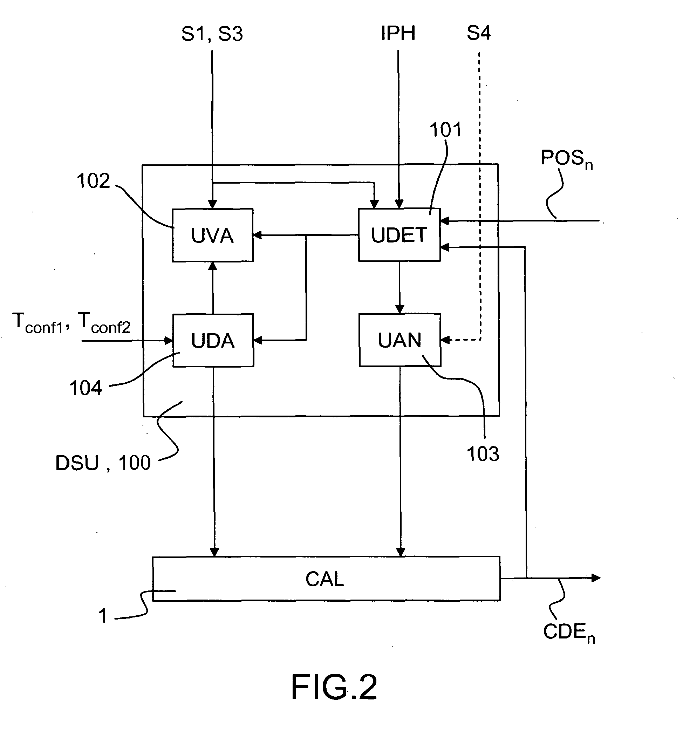

La figure 2 représente schématiquement un dispositif de surveillance DSU, 100, selon l'invention palliant cet inconvénient.

Le dispositif de surveillance DSU fait partie de l'équipement de pilotage automatique, il comporte :
- une unité de détection UDET, 101 ;
- une unité de validation UVA, 102 ;
- une unité d'analyse UAN, 103 ;
- une unité de datation UDA, 104;
- un calculateur CCA, 105.

L'unité de détection UDET détermine si le dispositif de surveillance DSU reçoit une information « panne hydraulique » IPH provenant du circuit hydraulique CH associé à l'actionneur ACT.

Avantageusement, le circuit hydraulique comporte un manomètre délivrant l'information de « panne hydraulique » IPH.

L'unité de détection UDET, alimentée par l'information de position POSₙ de l'actionneur et la consigne de position CDEₙ à une date tₙ, détecte la présence d'une anomalie de fonctionnement de l'asservissement à l'aide de deux paramètres S1 et S3 dont les valeurs sont à fixer.

Lorsque une anomalie de l'asservissement est détectée par l'unité UDET, l'unité de validation UVA ouvre une phase d'alerte. L'unité de validation UVA maintient la phase d'alerte ouverte tant que l'unité de détection UDET détecte une anomalie et clôt la phase d'alerte dès qu'aucune anomalie n'est plus détectée par l'unité UDET ou dès que la génération de l'asservissement de déplacement destiné à l'actionneur (20) est inhibée. La détection de la persistance de l'anomalie par l'unité UDET obéit aux mêmes critères que la détection de l'apparition de l'anomalie.

L'unité de datation UDA détermine la date tₒ à laquelle la phase d'alerte est ouverte.

Avantageusement, la phase d'alerte est ouverte à une date t₀,
caractérisé en ce que les étapes de la phase d'alerte sont répétées séquentiellement à des instant tₙ ; où n représente un indice de répétition des étapes de la phase d'alerte.

Dans ce qui suit, tₙ définit une date chronologiquement postérieure à l'ouverture d'une phase d'alerte.

La valeur du seuil S1 correspond à une vitesse minimum de déplacement de l'actionneur ACT en dessous de laquelle l'actionneur est considéré comme immobile. L'unité UDET évalue l'existence d'une anomalie aux date tₙ et pour ce faire, elle évalue la position de l'actionneur à cette date tₙ. Si l'intervalle de temps séparant deux dates tₙ successives, c'est à dire si tₙ₊₁-tₙ est constant, on peut exprimer le paramètre S1 sous la forme d'une distance minimale parcourue par l'actionneur pendant la durée tₙ₊₁-tₙ. S1 doit avoir une valeur supérieure au bruit pouvant parasiter l'information de position POSₙ de l'actionneur..

Pour l'axe de lacet d'un hélicoptère de type A109 LUH, on choisit une valeur de S1 égale, par exemple, à 0,1 millimètre, ce qui correspond, si la durée tₙ₊₁-tₙ séparant deux déterminations successives de présence d'anomalie vaut 20 millisecondes, à un mouvement de vitesse moyenne minimum égale à 5 millimètre/seconde.

Par ailleurs, la valeur du seuil S3 correspond à la valeur minimale de l'écart entre la position POSₙ de l'actionneur (20) et la consigne CDEₙ pour que sa vitesse atteigne au minimum la valeur S1/(tₙ₊₁-tₙ) sur la durée tₙ₊₁-tₙ. La valeur de S3 doit tenir compte des erreurs liées à l'acquisition de la position POSₙ de l'actionneur (20) et des erreurs liées à la boucle d'asservissement de position de l'actionneur (20).

Pour l'axe de lacet d'un hélicoptère de type A109 LUH, on choisit, par exemple, une valeur de S3 égale à 0,4 millimètre.

Avantageusement, n étant supérieur ou égal à 1, une position POSₙ étant occupée par l'actionneur (20) à la date tₙ, ΔP_{n,n-1} étant un écart entre POSₙ et POSₙ₋₁, ΔPCₙ étant un écart entre POSₙ et une consigne de position CDEₙ à la date tₙ, Δdₙ étant un écart entre POSₙ et la position POS₀ que l'actionneur (20) occupait à la date t₀,
caractérisé en ce que, une détection d'anomalie comporte les étapes consistant à :
- Comparer la valeur absolue de l'écart ΔPCₙ et un seuil S3 ;
- Comparer la valeur absolue de l'écart ΔPₙ,ₙ₋₁ et un seuil S1 ;
- Comparer le signe de l'écart ΔPₙ,ₙ₋₁ et le signe de l'écart ΔPCₙ.

Avantageusement, la présence d'une anomalie de fonctionnement de l'asservissement est détectée si au moins une des conditions suivantes est remplie :
- la valeur absolue de l'écart ΔPCₙ est supérieure au seuil S3 et la valeur absolue de ΔPₙ,ₙ₋₁ est inférieure au seuil S1,
- la valeur absolue de l'écart ΔPCₙ est supérieure au seuil S3 et le signe de ΔPₙ,ₙ₋₁ est différent du signe de l'écart ΔPCₙ.

A chaque instant tₙ, l'unité de datation UDA détermine si la durée de la phase d'alerte dépasse une valeur T_{conf1} ou bien si la durée de la phase d'alerte dépasse une valeur T_{conf2}.

La valeur du paramètre T_{conf1} correspond à la durée minimum nécessaire à l'extrémité de l'axe de sortie du vérin série de l'actionneur ACT pour changer de sens de déplacement. Cette durée est directement dépendante des caractéristiques dynamiques de l'actionneur ACT. Par exemple pour un actionneur équipant un hélicoptère de type A109 LUH, T_{conf1} prend la valeur 40 millisecondes.

La valeur du paramètre T_{conf2} correspond à la durée du retard avec lequel l'information de perte hydraulique est connue de l'unité de calcul. Par exemple sur un dispositif selon l'invention équipant un hélicoptère de type A109 LUH, T_{conf2} prend la valeur 0,4 seconde.

Avantageusement, la durée T_{conf2} est supérieure à la durée T_{conf1}.

Avantageusement, la durée T_{conf1} est inférieure ou égale à 50 milli-secondes.

Avantageusement, la durée T_{conf2} est inférieure ou égale à 500 milli-secondes.

Par ailleurs, à chaque instant tₙ, l'unité d'analyse UAN détermine si l'anomalie est provoquée par l'état bloqué ou par l'état divergent de l'actionneur. Pour ce faire l'unité d'analyse emploie un paramètre S4 dont la valeur est à fixer.

Avantageusement, on détermine que l'actionneur est dans l'état divergent si les conditions suivantes sont remplies :
- la valeur absolue de l'écart Δdₙ est supérieure au seuil S4,
- les écarts Δdₙ et ΔPCₙ ont des signes opposés.

Avantageusement, on détermine que l'actionneur est dans l'état bloqué si l'actionneur n'est pas dans l'état divergent. La valeur du paramètre S4 correspond à la valeur minimale du déplacement de l'actionneur ACT en dessous duquel l'actionneur ACT est considéré comme bloqué. La valeur du seuil S4 doit être supérieure au jeu interne de l'actionneur ACT. Sur un hélicoptère du type A109 LUH, la valeur de S4 vaut par exemple 0,3 millimètre

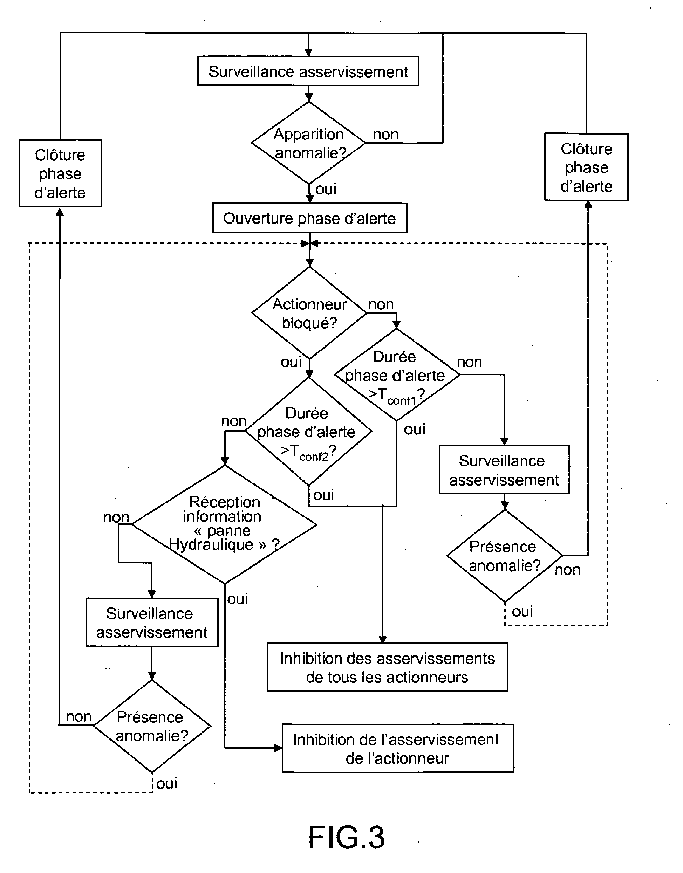

La figure 3 représente un organigramme comportant des étapes d'un procédé de surveillance d'un asservissement selon l'invention.

Une première phase du procédé consiste à surveiller l'apparition d'une anomalie de l'asservissement. Cette surveillance est fondée sur un recueil, périodique ou non, d'informations aux dates tₙ, sur la position de l'actionneur, sur la consigne de déplacement et sur une information « panne hydraulique » IPH provenant du manomètre du circuit hydraulique indiquant si la pression hydraulique du circuit hydraulique descend en dessous d'un certain seuil.

Dès qu'une anomalie est détectée, une phase d'alerte est ouverte et maintenue ouverte tant que la présente de l'anomalie est détectée. La détection de la persistance de la présence de l'anomalie se fait également aux dates tₙ.

Une fois qu'une phase d'alerte est ouverte, on s'assure que l'ouverture n'est pas intempestive, c'est à dire que l'anomalie qui a déclenché l'ouverture ne correspond pas à un artefact, à une fausse alerte très brève. On attend donc que l'anomalie soit présente sur une certaine durée continue avant de prendre une mesure correctrice pour constituer un dispositif de surveillance robuste peu sensible aux déclenchement intempestifs.

On l'a vu, les conséquences induites par un état divergent d'un actionneur sont potentiellement plus rapidement dangereuses que celle induites par un état bloqué du même actionneur, il est donc raisonnable d'attendre une durée moins longue pour prendre une mesure correctrice si on est en présence d'un actionneur en état divergent que si on est en présence d'un actionneur en état bloqué. Ainsi, si l'actionneur est en état divergent, on attend que l'anomalie apparaisse sur une durée T_{conf1} et si l'actionneur est en état bloqué, on attend que l'anomalie apparaisse sur une durée T_{conf2} avec T_{conf1} inférieur à T_{conf2}.

L'évaluation, à la date tₙ, de la durée de la phase d'alerte est réalisée par la soustraction de la date tₙ et de la date t₀.

Avantageusement, à la date tₙ, pour n supérieur ou égal à 1, si l'actionneur est dans l'état bloqué, la durée de la phase d'alerte dépasse la valeur T_{conf2}, ou si l'actionneur est dans l'état divergent et la durée de la phase d'alerte dépasse la valeur T_{conf1}, la génération de tous les asservissements de déplacement, produits par l'unité de calcul, destinés à des actionneurs agissant sur des commandes de vol est inhibée et la phase d'alerte est close.

Avantageusement, à l'instant tₙ, pour n supérieur ou égal à 1, si l'actionneur est dans l'état bloqué, la durée de la phase d'alerte ne dépasse pas la valeur T_{conf2}, et aucune information de « panne hydraulique » IPH, est reçue, ou si l'actionneur est dans l'état divergent et la durée de la phase d'alerte ne dépasse pas la valeur T_{conf1}, on détermine si la phase d'alerte est close ou si les étapes de la phase d'alerte sont répétées une fois supplémentaire, sur la base d'une présence d'anomalie à la date tₙ₊₁.

Selon l'art antérieur, la mesure de sauvegarde, ou mesure correctrice, correspond à une inhibition de la génération de tous les asservissements destinés à des actionneurs agissant sur une commande de vol au moyen d'un circuit hydraulique.

Dans une situation où l'anomalie correspond à un actionneur en état bloqué et où cet état de l'actionneur est causé par une panne du circuit hydraulique qui lui est associé, une telle mesure de sauvegarde s'avère pénalisante pour le pilote. En effet l'équipement de pilotage automatique est totalement désengagé alors qu'il n'a pas à craindre une contagion de l'anomalie à tous les asservissements des actionneurs. Il est donc judicieux de distinguer si l'état bloqué de l'actionneur est causé par une « panne hydraulique ». Dans le cas où une panne hydraulique vient à être détectée, la mesure de sauvegarde correspond à une inhibition de la génération du seul asservissement destiné à l'actionneurs dont le blocage est détecté.

On prend en compte un retard avec lequel les manomètres des circuits hydrauliques délivrent une information de « panne hydraulique », IPH en mettant en oeuvre la mesure de sauvegarde dès que l'information de « panne hydraulique », IPH est connue.

Avantageusement, à la date tₙ, pour n supérieur ou égal à 1, si l'actionneur est dans l'état bloqué et la durée de la phase d'alerte dépasse la valeur T_{conf2} ou si l'actionneur est dans l'état divergent et la durée de la phase d'alerte dépasse la valeur T_{conf1}, la génération de tous les asservissements de déplacement, produits par l'unité de calcul, destinés à des actionneurs agissant sur des commandes de vol est inhibée et la phase d'alerte est close.

Avantageusement, à la date tₙ, pour n supérieur ou égal à 1, si l'actionneur est dans l'état bloqué, la durée de la phase d'alerte ne dépasse pas la valeur T_{conf2}, et une information de « panne hydraulique » est reçue, la génération de l'asservissement de déplacement, produit par l'unité de calcul, destiné à l'actionneur est inhibée et la phase d'alerte est close.

## Revendications

1. Procédé de surveillance d'asservissement de déplacement d'actionneur (20) agissant sur une commande de vol d'un aéronef, la commande de vol étant assistée en puissance par un circuit hydraulique (30), le circuit hydraulique (30) pouvant délivrer une information de « panne hydraulique », IPH, indiquant si la pression hydraulique du circuit hydraulique descend en dessous d'un certain seuil, l'asservissement étant généré à partir d'une information de position de l'actionneur (20) et d'une information de consigne de position calculée par une unité de calcul (1), une phase d'alerte étant ouverte à la détection d'une présence d'une anomalie de fonctionnement de l'asservissement, la phase d'alerte étant ouverte à une date t₀ et étant maintenue ouverte tant que l'anomalie est présente; **caractérisé en ce que** la phase d'alerte comporte au moins les étapes suivantes :
- Déterminer si l'actionneur (20) est dans un état bloqué ou dans un état divergent,
- Lorsque l'actionneur (20) est dans l'état bloqué , déterminer si la durée de la phase d'alerte dépasse une valeur T_{conf2} ;
- Lorsque l'actionneur (20) est dans l'état divergent, déterminer si la durée de la phase d'alerte dépasse une valeur T_{conf1} ;
- Lorsque l'actionneur (20) est dans l'état bloqué, si la durée de la phase d'alerte ne dépasse pas une valeur T_{conf2}, déterminer si le circuit hydraulique (30) a délivré l'information de « panne hydraulique », IPH.

2. Procédé de surveillance selon la revendication 1, **caractérisé en ce que** les étapes de la phase d'alerte sont répétées séquentiellement à des instant tₙ ; où n représente un indice de répétition des étapes de la phase d'alerte.

3. Procédé de surveillance selon l'une des revendications 1 à 2, **caractérisé en ce que**, à la date tₙ, pour n supérieur ou égal à 1, si l'actionneur (20) est dans l'état bloqué et la durée de la phase d'alerte dépasse la valeur T_{conf2} ou si l'actionneur (20) est dans l'état divergent et la durée de la phase d'alerte dépasse la valeur T_{conf1}, la génération de tous les asservissements de déplacement, produits par l'unité de calcul (1), destinés à des actionneurs (20) agissant sur des commandes de vol est inhibée et la phase d'alerte est close.

4. Procédé de surveillance selon l'une des revendications 1 à 3, **caractérisé en ce que**, à la date tₙ, pour n supérieur ou égal à 1, si l'actionneur (20) est dans l'état bloqué, la durée de la phase d'alerte ne dépasse pas la valeur T_{conf2}. et une information de « panne hydraulique » est reçue, la génération de l'asservissement de déplacement, produit par l'unité de calcul (1), destiné à l'actionneur (20) est inhibée et la phase d'alerte est close.

5. Procédé de surveillance selon l'une des revendications 1 à 4, **caractérisé en ce que**, à l'instant tₙ, pour n supérieur ou égal à 1, si l'actionneur (20) est dans l'état bloqué, la durée de la phase d'alerte ne dépasse pas la valeur T_{conf2}. et aucune information de « panne hydraulique » IPH est reçue, ou si l'actionneur (20) est dans l'état divergent et la durée de la phase d'alerte ne dépasse pas la valeur T_{conf1}, on détermine si la phase d'alerte est close ou si les étapes de la phase d'alerte sont répétées une fois supplémentaire, sur la base d'une présence d'anomalie à la date tₙ₊₁.

6. Procédé de surveillance selon l'une des revendications 1 à 5, **caractérisé en ce que**, le circuit hydraulique (30) comporte un manomètre délivrant l'information de « panne hydraulique », IPH.

7. Procédé de surveillance selon l'une des revendications 2 à 6, n étant supérieur ou égal à 1, une position POSₙ étant occupée par l'actionneur (20) à la date tₙ, ΔP_{n,n-1} étant un écart entre POSₙ et POSₙ₋₁, ΔPCₙ étant un écart entre POSₙ et une consigne de position CDEₙ à la date tₙ, Δdₙ étant un écart entre POSₙ et la position POS₀ que l'actionneur (20) occupait à la date t₀,
**caractérisé en ce que**, une détection d'anomalie comporte les étapes consistant à :
- Comparer la valeur absolue de l'écart ΔPCₙ et un seuil S3;
- Comparer la valeur absolue de l'écart ΔP_{n,n-1} et un seuil S1;
- Comparer le signe de l'écart ΔP_{n,n-1} et le signe de l'écart ΔPCₙ.

8. Procédé de surveillance selon la revendication 7 **caractérisé en ce que** la présence d'une anomalie de fonctionnement de l'asservissement est détectée si au moins une des conditions suivantes est remplie :
- la valeur absolue de l'écart ΔPCₙ est supérieure au seuil S3 et la valeur absolue de ΔP_{n,n-1} est inférieure au seuil S1 ;
- la valeur absolue de l'écart ΔPCₙ est supérieure au seuil S3 et le signe de l' écart ΔP_{n,n-1} est différent du signe de l'écart ΔPCₙ.

9. Procédé de surveillance selon l'une des revendications 7 à 8, **caractérisé en ce que** l'on détermine que l'actionneur (20) est dans l'état divergent si les conditions suivantes sont remplies :
- la valeur absolue de l'écart Δdₙ est supérieure au seuil S4,
- les écarts Δdₙ et ΔPCₙ ont des signes opposés.

10. Procédé de surveillance selon la revendication 9, **caractérisé en ce que** l'on détermine que l'actionneur (20) est dans l'état bloqué si l'actionneur (20) n'est pas dans l'état divergent.

11. Procédé de surveillance selon l'une des revendications 1 à 10 **caractérisé en ce que** la valeur T_{conf2} est inférieure ou égale à 500 milli-secondes.

12. Procédé de surveillance selon l'une des revendications 1 à 11 **caractérisé en ce que** la valeur Tc_{onf2} est supérieure à la valeur T_{conf1}.

13. Procédé de surveillance selon l'une des revendications 1 à 12 **caractérisé en ce que** la valeur T_{conf1} est inférieure ou égale à 50 milli-secondes.

14. Dispositif de surveillance d'un asservissement de déplacement d'actionneur (20), agissant sur une commande de vol d'un aéronef, la commande de vol étant assistée en puissance par un circuit hydraulique (30), le circuit hydraulique (30), pouvant délivrer une information de « panne hydraulique » IPH, l'asservissement étant généré, à un instant tₙ, à partir d'une information de position POSₙ de l'actionneur ACT à l'instant tₙ et d'une consigne de position CDEₙ calculée par une unité de calcul (1) à l'instant tₙ, ledit dispositif mettant en oeuvre un procédé selon l'une des revendications précédentes,
**caractérisé en ce qu'**il comporte :
- une unité de détection UDET (101) pour déterminer, à la date tₙ, pour n supérieur ou égal à 1 :
○ une présence d'une anomalie de fonctionnement de l'asservissement ;
○ si le dispositif de surveillance reçoit une information « panne hydraulique » IPH générée par le circuit hydraulique.
- une unité de validation UVA (102) pour :
○ ouvrir une phase d'alerte lorsque la présence d'une anomalie est détectée ;
○ maintenir la phase d'alerte ouverte tant que l'unité de détection UDET détecte la présence de l'anomalie ;
○ clore la phase d'alerte dès que l'unité de détection UDET ne détecte plus la présence d'une anomalie ou dès que la génération, par l'unité de calcul (1), de l'asservissement de déplacement destiné à l'actionneur (20) est inhibée.
- une unité de datation UDA (104) pour :
○ déterminer la date tₒ à laquelle la phase d'alerte est ouverte,
○ déterminer, à l'instant tₙ, pour n supérieur ou égal à 1, si une durée de la phase d'alerte dépasse une valeur T_{conf1}
○ déterminer, à l'instant tₙ, pour n supérieur ou égal à 1, si la durée de la phase d'alerte dépasse une valeur T_{conf2}.
- une unité d'analyse UAN (103) pour déterminer si l'anomalie est liée à un actionneur (20) en état bloqué ou à un actionneur (20) en état divergent.

## Claims

1. A method for monitoring the servo-control displacement of an actuator (20) acting on a flight command of an aircraft, said flight command being power assisted by a hydraulic circuit (30), said hydraulic circuit (30) being designed to deliver "hydraulic failure" information (IPH) that indicates whether the hydraulic pressure of said hydraulic circuit drops below a certain threshold, the servo-control being generated on the basis of information concerning the position of said actuator (20) and information concerning the position setpoint that is computed by a computation unit (1), an alert phase being opened on detection of the presence of a servo-control operating anomaly, the alert phase being opened at a time tₒ and being kept open as long as the anomaly is present;
**characterised in that** the alert phase comprises at least the following steps:
- determining whether said actuator (20) is in a blocked state or in a divergent state;
- determining, when said actuator (20) is in the blocked state, whether the duration of the alert phase exceeds a value T_{conf2;}
- determining, when said actuator (20) is in the divergent state, whether the duration of the alert phase exceeds a value Tc_{onf1;}
- determining, when said actuator (20) is in the blocked state, whether said hydraulic circuit (30) has delivered the "hydraulic failure" information (IPH) if the duration of the alert phase does not exceed a value T_{conf2}.

2. The monitoring method according to claim 1, **characterised in that** the steps of the alert phase are sequentially repeated at instants tₙ, where n represents a repetition index of the steps of the alert phase.

3. The monitoring method according to any one of claims 1 to 2, **characterised in that** at the time tₙ, where n is greater than or equal to 1, if said actuator (20) is in the blocked state and the duration of the alert phase exceeds the value T_{conf2} or if said actuator (20) is in the divergent state and the duration of the alert phase exceeds the value T_{conf1}, the generation of all of the displacement servo-controls that are produced by said computation unit (1) and that are intended for actuators (20) acting on flight commands is inhibited and the alert phase is closed.

4. The monitoring method according to any one of claims 1 to 3, **characterised in that** at the time tₙ, where n is greater than or equal to 1, if said actuator (20) is in the blocked state, the duration of the alert phase does not exceed the value T_{conf2} and "hydraulic failure" information is received, the generation of the displacement server control that is produced by said computation unit (1) and that is intended for the actuator (20) is inhibited and the alert phase is closed.

5. The monitoring method according to any one of claims 1 to 4, **characterised in that** at the time tₙ, where n is greater than or equal to 1, if said actuator (20) is in the blocked state, the duration of the alert phase does not exceed the value T_{conf2} and no "hydraulic failure" information (IPH) is received or if said actuator (20) is in the divergent state and the duration of the alert phase does not exceed the value T_{conf1}, a determination is made as to whether the alert phase is closed or whether the steps of the alert phase are repeated once more, based on the presence of an anomaly at the time tₙ₊₁.

6. The monitoring method according to any one of claims 1 to 5, **characterised in that** said hydraulic circuit (30) comprises a pressure gauge that delivers "hydraulic failure" information (IPH).

7. The monitoring method according to any one of claims 2 to 6, n being greater than or equal to 1, a position POSₙ being occupied by said actuator (20) at the time tₙ, ΔP_{n,n-1} being a difference between POSₙ and POSₙ₋₁, ΔPCₙ being a difference between POSₙ and a position setpoint CDEₙ at the time tₙ, Δdₙ being a difference between POSₙ and the position POS₀ that said actuator (20) occupied at the time to,
**characterised in that** an anomaly detection comprises the steps that consist in:
- comparing the absolute value of the difference ΔPCₙ with a threshold S3;
- comparing the absolute value of the difference ΔP_{n,n-1} with a threshold S1;
- comparing the sign of the difference ΔP_{n,n-1} with the sign of the difference ΔPCₙ.

8. The monitoring method according to claim 7, **characterised in that** the presence of a servo-control operating anomaly is detected if at least one of the following conditions is met:
- the absolute value of the difference ΔPCₙ is greater than the threshold S3 and the absolute value of ΔP_{n,n-1} is less than the threshold S1;
- the absolute value of the difference ΔPCₙ is greater than the threshold S3 and the sign of the difference ΔP_{n,n-1} differs from the sign of the difference ΔPCₙ.

9. The monitoring method according to any one of claims 7 to 8, **characterised in that** a determination is made as to whether said actuator (20) is in the divergent state if the following conditions are met:
the absolute value of the difference Δdₙ is greater than the threshold S4;
- the differences Δdₙ and ΔPCₙ have opposing signs.

10. The monitoring method according to claim 9, **characterised in that** a determination is made as to whether said actuator (20) is in the blocked state if said actuator (20) is not in the divergent state.

11. The monitoring method according to any one of claims 1 to 10, **characterised in that** the value T_{conf2} is less than or equal to 500 milliseconds.

12. The monitoring method according to any one of claims 1 to 11, **characterised in that** the value T_{conf2} is greater than the value T_{conf1}.

13. The monitoring method according to any one of claims 1 to 12, **characterised in that** the value T_{conf1} is less than or equal to 50 milliseconds.

14. A device for monitoring the servo-control displacement of an actuator (20) acting on a flight command of an aircraft, said flight command being power assisted by a hydraulic circuit (30), said hydraulic circuit (30) being designed to deliver "hydraulic failure" information (IPH), the servo-control being generated, at an instant tₙ, on the basis of position information POSₙ of said actuator ACT at the instant tₙ and a position setpoint CDEₙ that is computed by a computation unit (1) at the instant tₙ, said device implementing a method according to any one of the preceding claims,
**characterised in that** it comprises:
- a detection unit UDET (101) for determining, at the time tₙ, where n is greater than or equal to 1:
○ the presence of a servo control operating anomaly;
○ whether the monitoring device receives "hydraulic failure" information (IPH) generated by said hydraulic circuit;
- a validation unit UVA (102) for:
○ opening an alert phase when the presence of an anomaly is detected;
○ keeping the alert phase open as long as the detection unit UDET detects the presence of the anomaly;
○ closing the alert phase as soon as the detection unit UDET no longer detects the presence of an anomaly or as soon as the generation, by the computation unit (1), of the displacement servo-control intended for said actuator (20) is inhibited;
- a timing unit UDA (104) for:
○ determining the time to at which the alert phase is opened;
○ determining, at the time tₙ, where n is greater than or equal to 1, whether a duration of the alert phase exceeds a value Tc_{onf1;}
○ determining, at the time tₙ, where n is greater than or equal to 1, whether the duration of the alert phase exceeds a value T_{conf2};
- an analysis unit UAN (103) for determining whether the anomaly is associated with an actuator (20) in a blocked state or an actuator (20) in a divergent state.

## Patentansprüche

1. Verfahren zum Überwachen der Stellservosteuerungen eines Aktuators (20), der auf einen Flugbefehl eines Flugzeugs wirkt, wobei der Flugbefehl durch einen Hydraulikkreis (30) hilfskraftunterstützt wird, wobei der Hydraulikkreis (30) eine "Hydraulikausfall"-Information (IPH) liefern kann, die anzeigt, wenn der Hydraulikdruck des Hydraulikkreises unter einen bestimmten Schwellenwert abfällt, wobei die Servosteuerung auf der Basis einer Information über die Position des Aktuators (20) und einer von einer Recheneinheit (1) berechneten Positionseinstellwert-Information erzeugt wird, wobei bei Erfassung des Vorliegens einer Servosteuerfunktionsanomalie eine Alarmphase eingeleitet wird, wobei die Alarmphase zu einem Zeitpunkt tₒ eingeleitet und so lange aktiv gehalten wird, wie die Anomalie vorliegt;
**dadurch gekennzeichnet, dass** die Alarmphase wenigstens die folgenden Schritte beinhaltet:
- Ermitteln, ob der Aktuator (20) in einem gesperrten Zustand oder in einem abweichenden Zustand ist;
- Ermitteln, wenn der Aktuator (20) im gesperrten Zustand ist, ob die Dauer der Alarmphase einen Wert T_{conf2} übersteigt;
- Ermitteln, wenn der Aktuator (20) im abweichenden Zustand ist, ob die Dauer der Alarmphase einen Wert T_{conf1} übersteigt;
- Ermitteln, wenn der Aktuator (20) im gesperrten Zustand ist, ob der Hydraulikkreis (30) die "Hydraulikausfall"-Information (IPH) geliefert hat, wenn die Dauer der Alarmphase einen Wert T_{conf2} nicht übersteigt.

2. Überwachungsverfahren nach Anspruch 1, **dadurch gekennzeichnet, dass** die Schritte der Alarmphase sequentiell zu Zeitpunkten tₙ wiederholt werden, wobei n einen Wiederholungsindex der Schritte der Alarmphase repräsentiert.

3. Überwachungsverfahren nach einem der Ansprüche 1 bis 2, **dadurch gekennzeichnet, dass** zum Zeitpunkt tₙ, wobei n gleich oder größer als 1 ist, wenn der Aktuator (20) im gesperrten Zustand ist und die Dauer der Alarmphase den Wert T_{conf2} übersteigt oder wenn der Aktuator (20) im abweichenden Zustand ist und die Dauer der Alarmphase den Wert T_{conf1} übersteigt, die Erzeugung aller Stellservosteuerungen, die von der Rechenheit (1) produziert werden und die für Aktuatoren (20) bestimmt sind, die auf Flugbefehle wirken, gesperrt und die Alarmphase beendet wird.

4. Überwachungsverfahren nach einem der Ansprüche 1 bis 3, **dadurch gekennzeichnet, dass** zum Zeitpunkt tₙ, wobei n gleich oder größer als 1 ist, wenn der Aktuator (20) im gesperrten Zustand ist, die Dauer der Alarmphase den Wert T_{conf2} nicht übersteigt und eine "Hydraulikausfall"-Information empfangen wird, die Erzeugung der Stellservosteuerung, die von der Recheneinheit (1) erzeugt wird und für den Aktuator (20) bestimmt ist, gesperrt und die Alarmphase beendet wird.

5. Überwachungsverfahren nach einem der Ansprüche 1 bis 4, **dadurch gekennzeichnet, dass** zum Zeitpunkt tₙ, wobei n gleich oder größer als 1 ist, wenn der Aktuator (20) im gesperrten Zustand ist, die Dauer der Alarmphase den Wert T_{conf2} nicht übersteigt und keine "Hydraulikausfall"-Information (IPH) empfangen wird, oder wenn der Aktuator (20) im abweichenden Zustand ist und die Dauer der Alarmphase den Wert T_{conf1} nicht übersteigt, auf der Basis des Vorliegens einer Anomalie zum Zeitpunkt tₙ₊₁ ermittelt wird, ob die Alarmphase beendet wird oder ob die Schritte der Alarmphase ein weiteres Mal wiederholt werden.

6. Überwachungsverfahren nach einem der Ansprüche 1 bis 5, **dadurch gekennzeichnet, dass** der Hydraulikkreis (30) ein Druckmanometer umfasst, das die "Hydraulikausfall"-Information (IPH) liefert.

7. Überwachungsverfahren nach einem der Ansprüche 2 bis 6, wobei n gleich oder größer als 1 ist, wobei der Aktuator (20) zum Zeitpunkt tₙ eine Position POSₙ einnimmt, wobei ΔP_{n,n-1} eine Differenz zwischen POSₙ und POSₙ₋₁ ist, wobei ΔPCₙ eine Differenz zwischen POSₙ und einem Positionseinstellwert CDEₙ zum Zeitpunkt tₙ ist, wobei Δdₙ eine Differenz zwischen POSₙ und der Position POS₀ ist, die der Aktuator (20) zum Zeitpunkt to eingenommen hat,
**dadurch gekennzeichnet, dass** eine Anomalieerfassung die folgenden Schritte beinhaltet:
- Vergleichen des Absolutwerts der Differenz ΔPCₙ mit einem Schwellenwert S3;
- Vergleichen des Absolutwerts der Differenz ΔP_{n,n-1} mit einem Schwellenwert S1;
- Vergleichen des Vorzeichens der Differenz ΔP_{n,n-1} mit dem Vorzeichen der Differenz ΔPCₙ.

8. Überwachungsverfahren nach Anspruch 7, **dadurch gekennzeichnet, dass** das Vorliegen einer Servosteuerfunktionsanomalie dann erfasst wird, wenn wenigstens eine der folgenden Bedingungen erfüllt ist:
- der Absolutwert der Differenz ΔPCₙ ist größer als der Schwellenwert S3 und der Absolutwert von ΔP_{n,n-1} ist kleiner als der Schwellenwert S1;
- der Absolutwert der Differenz ΔPCₙ ist größer als der Schwellenwert S3 und das Vorzeichen der Differenz ΔP_{n,n-1} unterscheidet sich vom Vorzeichen der Differenz ΔPCₙ.

9. Überwachungsverfahren nach einem der Ansprüche 7 bis 8, **dadurch gekennzeichnet, dass** ermittelt wird, dass der Aktuator (20) im abweichenden Zustand ist, wenn die folgenden Bedingungen erfüllt sind:
- der Absolutwert der Differenz Δdₙ ist größer als der Schwellenwert S4;
- die Differenzen Δdₙ und ΔPCₙ haben entgegengesetzte Vorzeichen.

10. Überwachungsverfahren nach Anspruch 9, **dadurch gekennzeichnet, dass** ermittelt wird, dass der Aktuator (20) im gesperrten Zustand ist, wenn der Aktuator (20) nicht im abweichenden Zustand ist.

11. Überwachungsverfahren nach einem der Ansprüche 1 bis 10, **dadurch gekennzeichnet, dass** der Wert T_{conf2} gleich oder kleiner als 500 Millisekunden ist.

12. Überwachungsverfahren nach einem der Ansprüche 1 bis 11, **dadurch gekennzeichnet, dass** der Wert T_{conf2} größer als der Wert Tc_{onf1} ist.

13. Überwachungsverfahren nach einem der Ansprüche 1 bis 12, **dadurch gekennzeichnet, dass** der Wert T_{conf1} gleich oder kleiner als 50 Millisekunden ist.

14. Vorrichtung zum Überwachen der Stellservosteuerungen eines Aktuators (20), der auf einen Flugbefehl eines Flugzeugs wirkt, wobei der Flugbefehl von einem Hydraulikkreis (30) hilfskraftunterstützt wird, wobei der Hydraulikkreis (20) eine "Hydraulikausfall"-Information (IPH) liefern kann, wobei die Servosteuerung zu einem Zeitpunkt tₙ auf der Basis einer Positionsinformation POSₙ des Aktuators ACT zum Zeitpunkt tₙ und eines Positionseinstellwertes CDEₙ erzeugt wird, der von einer Recheneinheit (1) zum Zeitpunkt tₙ berechnet wird, wobei die Vorrichtung ein Verfahren nach einem der vorherigen Ansprüche ausführt,
**dadurch gekennzeichnet, dass** sie Folgendes umfasst:
- eine Erfassungseinheit UDET (101), um zum Zeitpunkt tₙ, wobei n gleich oder größer als 1 ist, Folgendes zu ermitteln:
○ das Vorliegen einer Servosteuerfunktionsanomalie;
○ ob die Überwachungsvorrichtung eine vom Hydraulikkreis erzeugte "Hydraulikausfall"-Information (IPH) empfängt;
- eine Validierungseinheit UVA (102) zum:
○ Einleiten einer Alarmphase, wenn das Vorliegen einer Anomalie erfasst wird;
○ Aktivhalten der Alarmphase, solange die Erfassungseinheit UDET das Vorliegen einer Anomalie erfasst;
○ Beenden der Alarmphase, sobald die Erfassungseinheit UDET das Vorliegen einer Anomalie nicht mehr erfasst oder sobald die Erzeugung der für den Aktuator (20) bestimmten Stellservosteuerung durch die Recheneinheit (1) gesperrt ist;
- eine Timing-Einheit UDA (104) zum:
○ Ermitteln des Zeitpunkts tₒ, an dem die Alarmphase eingeleitet wird;
○ Ermitteln zum Zeitpunkt tₙ, wobei n gleich oder größer als 1 ist, ob eine Dauer der Alarmphase einen Wert T_{conf1} übersteigt;
○ Ermitteln zum Zeitpunkt tₙ, wobei n gleich oder größer als 1 ist, ob die Dauer der Alarmphase einen Wert T_{conf2} übersteigt;
- eine Analyseeinheit UAN (103), um zu ermitteln, ob die Anomalie mit einem Aktuator (20) im gesperrten Zustand oder einem Aktuator (20) im abweichenden Zustand assoziiert ist.
